# EUROPEAN PATENT APPLICATION

(11) **EP 4 579 469 A1**
(43) Date of publication of application: **02.07.2025**
(21) Application number: 24206888.0
(22) Date of filing: 16.10.2024
(51) Int. Cl.: G06F 13/40, G06F 11/07, G06F 13/42

(54) **NETWORK CONTROLLER AND METHOD OF NETWORK CONTROL**

(30) Priority: 28.12.2023 KR 20230194550
(71) Applicant: Samsung Electronics Co., Ltd, Suwon-si, Gyeonggi-do 16677 (KR); Daegu Gyeongbuk Institute of Science and Technology, Dalseong-gun, Daegu 42988 (KR)
(72) Inventor: Hong, Seokbin, 16678 Suwon-si, Gyeonggi-do (KR); Kang, Mincheol, 16678 Suwon-si, Gyeonggi-do (KR); Kim, Gain, 42988 Daegu (KR); Kim, Dong Geon, 42988 Daegu (KR); Jang, Seo Young, 42988 Daegu (KR); Choi, Yu Jin, 42988 Daegu (KR)
(74) Representative: Grünecker Patent- und Rechtsanwälte PartG mbB

(57) **Abstract**

A network controller and operating method of the network controller are disclosed. The network controller includes, based on error information transmitted through a plurality of data link layers and a plurality of physical layers respectively corresponding to a plurality of ports managed by one transaction layer, a port monitor circuit configured to determine a number of valid ports among the plurality of ports by monitoring a status of the plurality of ports, a split circuit configured to split and transmit one packet to the valid ports based on the number of valid ports, and a reorder buffer configured to sort an order of second split packets, which are received from another network controller through the plurality of ports, and restore the second split packets received.

## Description

### BACKGROUND

### 1. Field

The following description relates to a network controller and operating method of the network controller.

### 2. Description of Related Art

Peripheral component interconnect express (PCIe) is a set of communication standards for computer interconnect technology that was developed with parallelism for high-speed communication while having compatibility with PCI. PCIe defines wiring units required for communication, that is, the number of differential signals, as lanes, and PCIe may be mainly used. The transmission speed of a PCIe system may vary according to the numbers and versions of lanes, for example. A PCIe connection is generally a point-to-point connection between endpoint devices, however, a PCIe connection may be expanded in the form of a tree using a PCIe switch. PCIe communication is generally point-to-point communication and may use serial communication through one link between devices. Therefore, the communication speed between two devices may be limited by the speed of a transceiver, and when a link is not available because of a path failure due to external factors, such as jitter or skew, the PCIe-based communication between the two devices may be interrupted for a certain period.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

The invention is what is claimed in the independent claims. Preferred embodiments are specified in the dependent claims.

In one general aspect, a network controller includes, based on error information transmitted through a plurality of data link layers and a plurality of physical layers respectively corresponding to a plurality of ports managed by one transaction layer, a port monitor circuit configured to determine a number of valid ports available among the plurality of ports by monitoring a status of the plurality of ports, a split circuit configured to split and transmit one packet to the valid ports based on the number of valid ports, and a reorder buffer configured to sort an order of second split packets received from another network controller through the plurality of ports and configured to restore the second split packets.

The error information may include at least one of a link training and status state machine (LTSSM) indicating a status of a link for each of the plurality of physical layers, an error message generated by an error of the one packet in the plurality of data link layers, or transaction layer packet (TLP) information transmitted through the one transaction layer.

The port monitor circuit may be configured to determine, by the LTSSM, whether communication of a physical layer corresponding to each of the plurality of ports is possible and configured to disable an invalid port unusable among the plurality of ports based on a type of the error message transmitted through a port capable of performing communication through the physical layer.

The port monitor circuit may be configured to disable the invalid port and then configured to train a link of the disabled invalid port.

In response to the type of the error message indicating correctable errors, the port monitor circuit may be configured to count the number of the correctable errors and configured to disable the invalid port among the plurality of ports based on the number of the correctable errors.

In response to the type of the error message indicating non-correctable errors, the port monitor circuit may be configured to disable the invalid port or configured to request error handling from a root complex according to whether the non-correctable errors are fatal errors.

The split circuit may be configured to split the one packet for the valid ports into packets based on at least one of whether the one packet includes a payload or a register set value of the one packet.

The split circuit may be configured to broadcast the one packet to the valid ports or configured to transmit the one packet to the valid ports by interleaving the one packet in a round-robin manner according to the register set value of the one packet in response to the one packet not including the payload.

The split circuit may be configured to broadcast the one packet to the valid ports in response to the register set value of the one packet indicating memory read (MRd) or a message.

The split circuit may be configured to transmit the one packet to the valid ports by splitting the one packet into packets or configured to transmit the one packet to the valid ports by interleaving the one packet in a round-robin manner based on at least one of a processing capacity of the valid ports or the register set value of the one packet in response to the one packet including the payload.

The split circuit may be configured to generate first split packets obtained by splitting the one packet by the number of the valid ports and configured to change a header and a prefix for each of the first split packets in response to a processing capacity of the valid ports being less than a set reference.

The each of the first split packets may be a packet that satisfies a peripheral component interconnect express (PCIe) standard.

The split circuit may be configured to transmit the one packet to the valid ports by interleaving the one packet in the round-robin manner in response to the register set value of the one packet indicating memory write (MWr) or a processing capacity of the valid ports being greater than or equal to a set reference.

The reorder buffer may be configured to sort the order of the second split packets using a prefix of the second split packets.

The reorder buffer may be configured to increase a first counter value as the second split packets are received from the other network controller and configured to allocate the received second split packets to a way buffer according to whether the increased first counter value matches a tag value of split packets to be currently processed.

The reorder buffer may be configured to restore the second split packets to the one packet by increasing and sorting a second counter value corresponding to the number of packets that arrive at a first counter in response to the increased first counter value not matching the tag value of the split packets to be currently processed.

The network controller may further include an aggregation circuit configured to restore the second split packets to the one packet by aggregating the second split packets based on a register set value of the second split packets.

The aggregation circuit may be configured to aggregate headers of the second split packets into one header and configured to aggregate payloads of the second split packets into one payload.

The aggregation circuit may be configured to transmit the second split packets to the reorder buffer based on whether the second split packets include a payload and configured to determine whether to aggregate the second split packets based on the register set value of the second split packets.

In another general aspect, an operating method of a network controller, the operating method includes, based on error information transmitted through a plurality of data link layers and a plurality of physical layers respectively corresponding to a plurality of ports managed by one transaction layer, determining a number of valid ports among the plurality of ports by monitoring a status of the plurality of ports, splitting and transmitting one packet to the valid ports based on the number of the valid ports, and sorting an order of second split packets received from another network controller through the plurality of ports and restoring the second split packets.

Other features and aspects will be apparent from the following detailed description, the drawings, and the claims.

### BRIEF DESCRIPTION OF THE DRAWINGS

FIG. 1 illustrates an example network controller, according to one or more embodiments.
FIG. 2 illustrates an example method in which a network controller splits and aggregates packets, according to one or more embodiments.
FIG. 3 illustrates an example port management structure of a network controller, according to one or more embodiments.
FIG. 4A illustrates an example packet flow standard through a PCIe layers, according to one or more embodiments.
FIG. 4B illustrates an example format of a PCIe end-to-end prefix, according to one or more embodiments.
FIG. 4C illustrates an example format definition of a prefix for a network controller, according to one or more embodiments.
FIG. 5 illustrates an example network controller including a function of splitting and aggregating packets, according to one or more embodiments.
FIG. 6 illustrates an example mechanism of a packet split operation of a network controller, according to one or more embodiments.
FIG. 7 illustrates an example method in which a network controller splits packets in various ways according to the type of transaction layer packet (TLP), according to one or more embodiments.
FIG. 8 illustrates an example method of operating a split circuit of a network controller, according to one or more embodiments.
FIG. 9 illustrates an example operation of a port monitor circuit, according to one or more embodiments.
FIG. 10 illustrates an example method of operating a port monitor circuit, according to one or more embodiments.
FIG. 11 illustrates an example operation of a reorder buffer and an aggregation circuit of a network controller, according to one or more embodiments.
FIG. 12 illustrates an example method of a network controller aggregating and reordering packets, according to one or more embodiments.
FIG. 13 illustrates an example operation of an aggregation circuit of a network controller, according to one or more embodiments.
FIG. 14A illustrates an example method of operating a reorder buffer of a network controller, according to one or more embodiments.
FIG. 14B illustrates an example operation of a reorder buffer of a network controller, according to one or more embodiments.
FIG. 15 illustrates an example in which a network controller is used in a multiple devices, according to one or more embodiments.
FIG. 16 illustrates an example operating method of a network controller, according to one or more embodiments.

Throughout the drawings and the detailed description, unless otherwise described or provided, the same or like drawing reference numerals will be understood to refer to the same or like elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known after an understanding of the disclosure of this application may be omitted for increased clarity and conciseness.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

The terminology used herein is for describing various examples only and is not to be used to limit the disclosure. The articles "a," "an," and "the" are intended to include the plural forms as well, unless the context clearly indicates otherwise. As used herein, the term "and/or" includes any one and any combination of any two or more of the associated listed items. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof.

Throughout the specification, when a component or element is described as being "connected to," "coupled to," or "joined to" another component or element, it may be directly "connected to," "coupled to," or "joined to" the other component or element, or there may reasonably be one or more other components or elements intervening therebetween. When a component or element is described as being "directly connected to," "directly coupled to," or "directly joined to" another component or element, there can be no other elements intervening therebetween. Likewise, expressions, for example, "between" and "immediately between" and "adjacent to" and "immediately adjacent to" may also be construed as described in the foregoing.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

Unless otherwise defined, all terms, including technical and scientific terms, used herein have the same meaning as commonly understood by one of ordinary skill in the art to which this disclosure pertains and based on an understanding of the disclosure of the present application. Terms, such as those defined in commonly used dictionaries, are to be interpreted as having a meaning that is consistent with their meaning in the context of the relevant art and the disclosure of the present application and are not to be interpreted in an idealized or overly formal sense unless expressly so defined herein. The use of the term "may" herein with respect to an example or embodiment, e.g., as to what an example or embodiment may include or implement, means that at least one example or embodiment exists where such a feature is included or implemented, while all examples are not limited thereto.

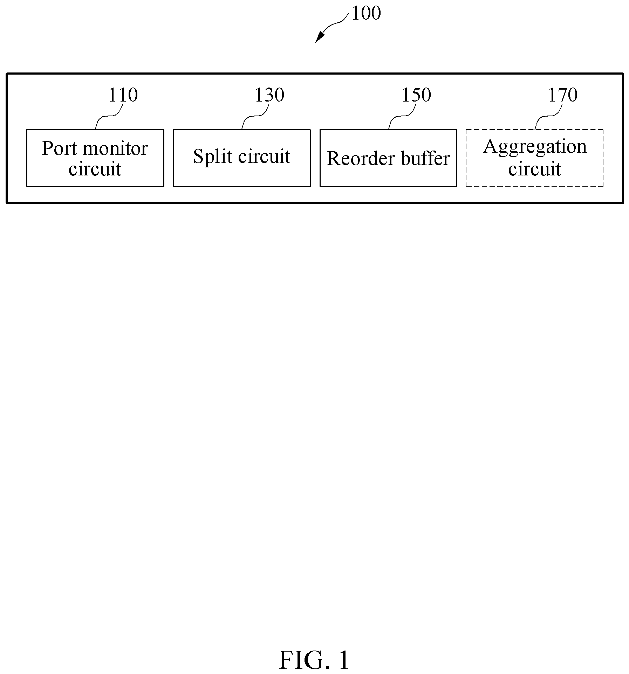

FIG. 1 illustrates an example network controller, according to one or more embodiments. Referring to FIG. 1, a network controller 100 may include a port monitor circuit 110, a split circuit 130, and a reorder buffer 150. The network controller 100 may further include an aggregation circuit 170. The network controller 100 may be, for example, a peripheral component interconnect express (PCIe) controller.

Based on error information transmitted through data link layers and physical layers respectively corresponding to ports managed by one transaction layer, the port monitor circuit 110 may determine the number of valid ports available among the ports by monitoring statuses of the ports. The port monitor circuit 110 may collect pieces of error information (information related to errors, but not necessarily errors per se), may determine whether the ports are available, and may determine (set) a port to be disabled. Here, the pieces of error information may include, as non-limiting examples, a link training and status state machine (LTSSM) indicating a state of a link for each of the physical layers, an error message generated by an error of a packet in the data link layers, and transaction layer packet (TLP) information transmitted through a transaction layer. Hereinafter, the TLP may also be referred to as a 'TLP packet.'

The LTSSM is a status machine defining link connectivity and link power management in a universal serial bus (USB). Generally, the LTSSM is a logic block in the MAC layer of the PCIe stack. The LTSSM may be in any of 12 different states, and each state may have a characteristic according to each function. Although LTSSMs are described elsewhere, the LTSSM's states and their roles are generally as follows.

Detect State: a state in which the port monitor circuit 110 discovers a link, is the initial state of the LTSSM, and may be entered after the port monitor circuit 110 is reset or when the LTSSM is booted for the first time. In the detect state, logic, ports, and registers may all be reset.

Polling State: a state for performing bit locking, symbol locking, lane polarity, block sorting, lane data speed, and the like. The polling state may perform link synchronization and data transmission.

Configuration State: a state for performing lane reversal, link and lane numbering, deskew between lanes, and the like. The configuration state may perform link configuration and optimization.

Recovery State: a state for resetting bit locking, symbol locking, block sorting, deskew between lanes, and the like. The recovery state may perform a link speed change, loopback, hot reset, a stage before entering disabling, and the like. The recovery state is complex and has many internal variables that can affect the LTSSM.

L0 State: a state in which the port monitor circuit 110 normally transmits and receives data.

L0s State: a sub-state of the L0 state a state in which power may be saved by quickly returning to the L0 state.

L1 State: Although returning to the L0 state from the L1 state is slower than returning to L0 the L0s state, the L1 state may correspond to a state in which power may be significantly saved.

L2 State: a state in which a device is turned off for maximum power saving.

Disable State: a state in which a transmitter is in an electrically idle state when a receiver is in a low-impedance state. In the disable state, 16 TS1s may be transmitted by setting a TC (traffic class) disable bit of TS1 to 1 ("TS" refers to "training sequence").

Loopback State: a state for testing, and a loopback bit of TS1 must be set to 1, in which case a receiver may echo (retransmit identically) all received packets.

Hot Reset State: a state in which a link may be reset by setting a secondary bus reset bit of a bridge control register to 1. In the hot reset state, a TC hot reset bit of TS1 may be set to 1 and transmitted.

The error message generated by the error of the packet in the data link layers may, for example, be transmitted/generated when a link is unstable due to an error in a cyclic redundancy check (CRC) value of the packet (CRC in packet header) from a link layer. Possible types of error messages may include correctable errors and non-correctable errors. The non-correctable errors may be divided into fatal errors and non-fatal errors. Fatal errors correspond to a state in which communication of both ports and components (the physical layers and data link layers) is impossible. Non-fatal errors correspond to a state in which communication of either port or component is impossible. The port monitor circuit 110 may process the packet (corresponding to the generated error message) in different ways depending on the type of the error message.

TLP information (e.g., in a TLP packet header) may include, for example, fields such as a completion state field and a poisoned packet field. The completion state field may represent the result of processing a TLP packet and may include 3 bits. The information represented by the completion state field is as follows:
000: Successful Completion - This may represent information that a TLP is successfully processed.
001: Unsupported Request - This may represent information that a TLP includes an unsupported request when there is a TLP having an incorrect address or instruction, for example.
010: Configuration Request Retry State - This may refer to a state in which a TLP includes a configuration request but is currently unable to process the configuration request. For example, this may occur when a target device is not initialized or is processing another request.
011: Completer Abort - This may represent information that a TLP is aborted due to an error during a processing process. For example, this may occur when there is a parity error or CRC error.
100: Unexpected Completion - This may represent information that a TLP receives unexpected completion. For example, this may occur when completion with a tag that is different from a requested tag is received.
101: Receiver Overflow - This may refer to a state in which a TLP may not perform processing because a receiving buffer is full.
110: Malformed TLP - This may indicate that a TLP has a malformed format. For example, this may occur when the length of a header does not match that of data or when a field of the header has an incorrect value.
111: Receiver Timeout - This may indicate that the time is out in a state in which a TLP is not received or not completed.

The poisoned packet may indicate that data is damaged due to an error that occurs during TLP processing. The poisoned packet may set a TD() field of a TLP to '1' to indicate that the data is unreliable. Here, the TD() field is a 1-bit field in a header of the TLP and may indicate whether there is end-to-end CRC (ECRC) in the poisoned packet. The ECRC may be generated from a transaction layer of a transmitting device and may be inspected at a transaction layer of a receiving device. The ECRC may include all fields that remain unchanged while the TLP is transmitted from a starting point to a destination and may be used to ensure data integrity between the transmitting device and the receiving device. For example, when the TD() field is 0, this may indicate that there is no ECRC in a packet and when the TD() field is 1, this may indicate that there is an ECRC in a packet. When the receiving device does not support ECRC and receives a packet with the TD() field of 1, the receiving device may ignore the packet and may transmit the response "unsupported request." In contrast, when the receiving device supports the ECRC and receives a packet with the TD() field of 0, the receiving device may normally process the packet. The poisoned packet may generally be generated due to a physical error such as a parity error or CRC error. A device that receives the poisoned packet may ignore the poisoned packet, may set the completion state to a completer abort state, and may notify a communication device of the error.

The port monitor circuit 110 may determine, from the state of the LTSSM, whether communication of a physical layer corresponding to each of the ports may be possible. The port monitor circuit 110 may disable an invalid port determined to be unavailable among the ports based on the type of error message transmitted through a port capable of performing communication through the physical layer.

The port monitor circuit 110 may disable the invalid port and may then train a link of the disabled invalid port.

The port monitor circuit 110 may count the number of correctable errors when the type of error messages represent the correctable errors and may disable the invalid port (among the ports) based on the counted number of correctable errors.

When the types of error messages represents non-correctable errors, the port monitor circuit 110 may opt between disabling the invalid port or requesting error handling from a root complex, which the choice made according to whether the non-correctable errors are fatal errors. Here, the 'root complex' is a device positioned at the highest layer of a PCIe system; the root complex may connect a system resource, such as a central processing unit (CPU) or memory, to PCIe endpoint (EP) devices. Here, the EP may include, for example, a storage device such as a solid-state drive (SSD), an accelerator such as a graphics processing unit (GPU), or the like. The root complex may include input/output (I/O) controller devices, including a PCIe controller, and may enable communication with external devices. The root complex and PCIe EP may be connected to each other in various form factor standards and by the lower number of lanes of a lower version to adjust the communication speed. Regarding the relationship between adjustment of communication speed and the root complex, if the root complex and the PCIe endpoint are connected to each other with a lower version and a lower number of lanes, the communication speed can be adjusted to be slower, for example. The root complex may be integrated into a chipset or CPU and may have at least one PCIe root port. Each root PCIe port may communicate with other PCIe devices through a PCIe switch or a PCIe bridge.

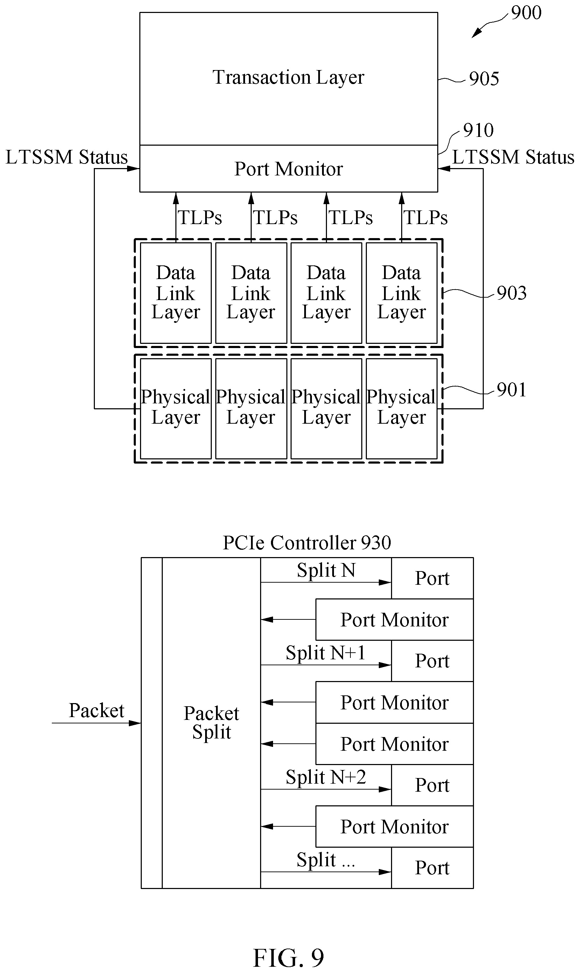

An operating method of the port monitor circuit 110 is described with reference to FIGS. 9 to 10B.

The split circuit 130 may split and transmit one packet to valid ports based on the current number of valid ports as determined by the port monitor circuit 110. The split circuit 130 may split the one packet in different ways and transmit the one packet according to its type.

The split circuit 130 may split the one packet for the valid ports based on whether the one packet includes a payload and/or based on a register set value of the one packet.

When the one packet does not include a payload, according to the register set value of the one packet, the split circuit 130 may transmit the one packet to the valid ports by broadcasting the one packet to the valid ports or interleaving the one packet in a round-robin manner. The split circuit 130 may broadcast the one packet to the valid ports when the register set value of the one packet represents memory read (MRd) or a message.

When the one packet includes a payload, the split circuit 130 may transmit the one packet to the valid ports by splitting the one packet or may transmit the one packet to the valid ports by interleaving the one packet in the round-robin manner, based on a processing capacity of the valid ports or based on the register set value of the one packet.

When the processing capacity of the valid ports is less than a set reference, the split circuit 130 may generate first split packets obtained by splitting the one packet into the number of valid ports and may change a header and prefix for each of the first split packets. Here, each of the first split packets may be a packet that conforms to a PCIe standard.

When the register set value of the one packet represents memory write (MWr), or when the processing capacity of the valid ports is greater than or equal to the set reference, the split circuit 130 may transmit the one packet to the valid ports by interleaving the one packet in the round-robin manner.

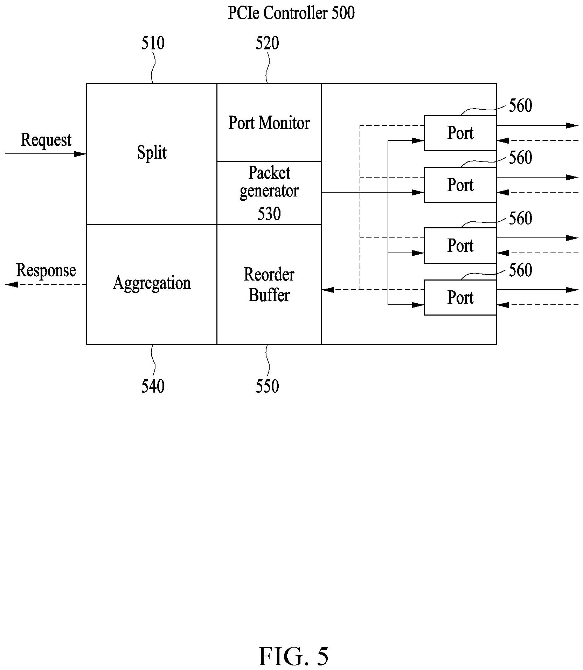

An operating method of the split circuit 130 is described with reference to FIGS. 5 to 8.

The reorder buffer 150 may sort the order of second split packets which are split packets received from other network controllers through the ports; the reorder buffer 150 may restore the second split packets (into a corresponding original one packet). The reorder buffer 150 may sort the second split packets into an order using the prefixes of the second split packets.

The reorder buffer 150 may increment a first counter value as each second split packets is received from other network controllers and may allocate the received second split packets to a buffer position according to whether the incremented first counter value matches tag values of split packets to be currently processed. When the increased first counter value does not match the tag values of the split packets to be currently processed, the reorder buffer 150 may restore the second split packets to one packet by increasing and sorting second counter values corresponding to the number of packets that arrives at a first counter. Here, the first counter may be referred to as a 'progress counter' and a second counter may be referred to as a 'segment counter.'

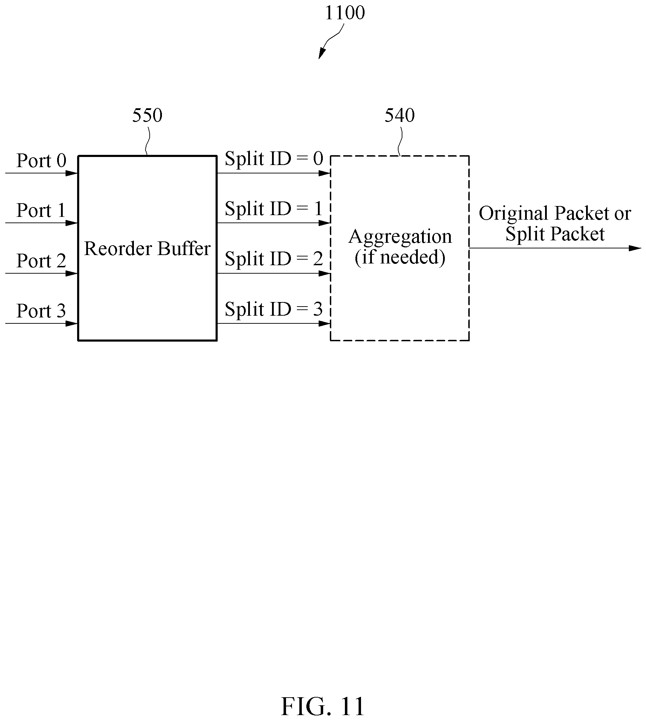

An operating method of the reorder buffer 150 is described with reference to FIGS. 11 and 12 and FIGS. 14A and 14B.

The aggregation circuit 170 may restore the second split packets to one packet by aggregating the second split packets based on a register set value of the second split packets. The aggregation circuit 170 may aggregate headers of the second split packets into one header and may aggregate payloads of the second split packets into one payload. The aggregation circuit 170 may transmit the second split packets to the reorder buffer 150 based on whether the second split packets include a payload. The aggregation circuit 170 may determine whether to aggregate the second split packets based on the register set value of each of the second split packets.

The function of restoring split packets to an original packet may vary according to implementation methods. When one packet is split into a certain size and transmitted, a value in a field of a PCIe packet may need to be changed accordingly, so the one packet may be correctly restored. In contrast, when packets are interleaved and transmitted, a restoration process may not be required, and the end-to-end prefix data may be sorted in order. As described above, when the packets are interleaved and transmitted, the restoration process may not be required (as the packets arrive in order), so the aggregation circuit 170 may not be involved. An operating method of the aggregation circuit 170 is described with reference to FIGS. 11 to 13.

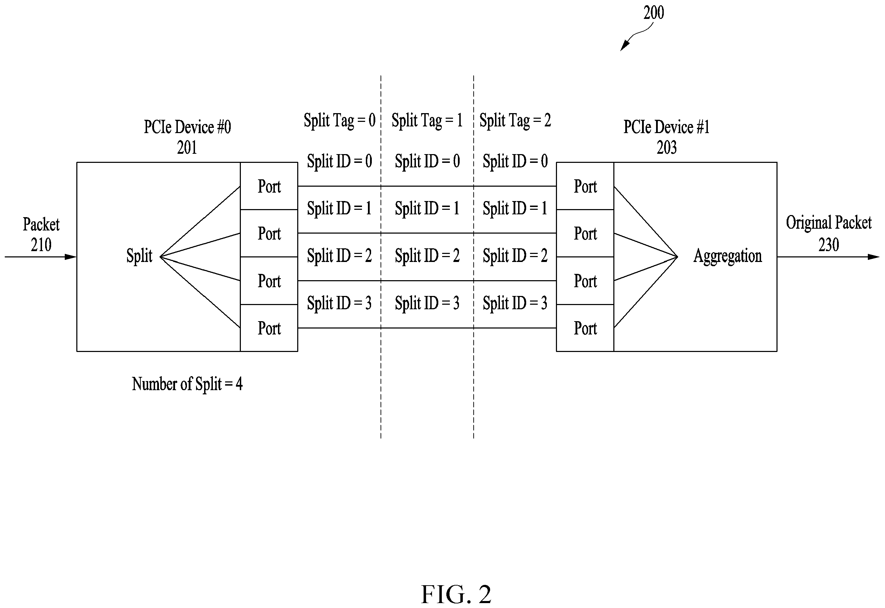

FIG. 2 illustrates an example method in which a network controller splits and aggregates packets, according to one or more embodiments. FIG. 2 shows a diagram 200 of a process in which a network controller PCIe Device #0 201 splits one packet 210 into split packets and a network controller PCIe Device #1 203 aggregates the split packets. The network controller PCIe Device #0 201 may be a transmitting side, and the other network controller PCIe Device #1 203 may be a receiving side.

The network controller PCIe Device #0 201 may split the one packet 210 into split packets of a certain size and may transmit the one packet 210 as the split packets, or may interleave and transmit packets (which are not split).

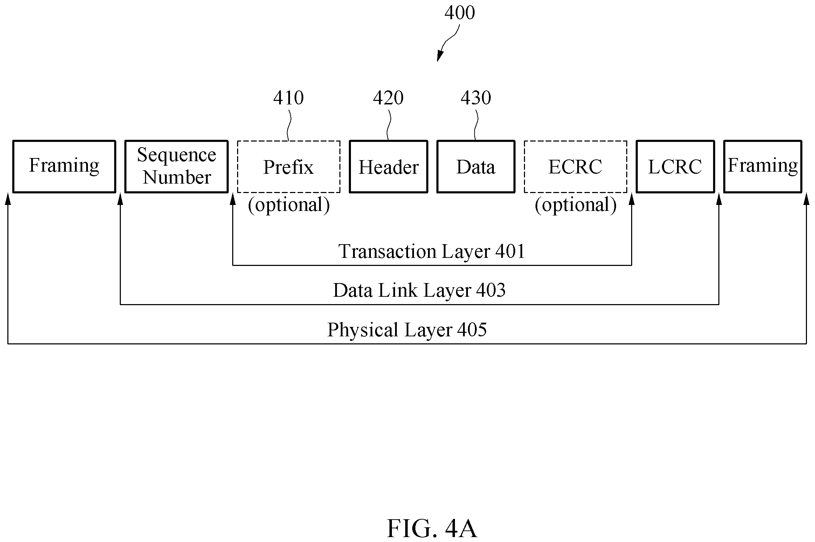

The network controller PCIe Device #0 201 may split the one packet 210 and may transmit the split packets using ports between PCIe devices. When the one packet 210 is to be split, the network controller PCIe Device #0 201 may be monitoring states of the ports to exclude unusable ports for the splitting. According to the monitoring result, among the ports, the network controller PCIe Device #0 201 may split and transmit the one packet 210 according to the number of currently valid (usable) ports. The network controller PCIe Device #0 201 may split the one packet 210 and may transmit the one packet 210 using an end-to-end prefix (shown in FIG. 4A). Each split packet may including prefix information such as a split tag and split identification (ID) (information indicating which one packet a split packet belongs to and an order number of the split packet among the split packets of the one packet). Accordingly, the other network controller PCIe Device #1 203 that receives the split packets may sort and assemble the split packets using the prefix information. The prefixes, such as the split tag and split ID, are described with reference to FIGS. 4A to 4C.

When a port is unusable, the network controller PCIe Device #0 201 may ascertain that fact by its continuous monitoring of the state of the ports through a port monitor circuit, which may thus allow packets to be transmitted by bypassing any ports in the unusable state. The port monitor circuit may determine whether a port is usable using a PCIe message packet (e.g., identifying correctable errors and non-correctable errors from the PCIe message packet), the LTSSM, link register, and the like, and may transmit the determination result to a split circuit.

The other network controller PCIe Device #1 203 may receive the split packets transmitted by the network controller 20PCle Device #0 201 from the valid ports. The network controller PCIe Device #1 203 may sort the order of received split packets with a reorder buffer and then may restore the split packets if needed. The network controller PCIe Device #1 203 may aggregate the split packets using the end-to-end prefix and may thus restore the split packets to an original packet 230.

A network controller may achieve high-bandwidth transmission efficiency through split transmission using the multiple ports that are available between the PCIe devices. A network controller may improve the reliability of packet transmission by observing and/or predicting the states of the ports through the port monitor circuit. In addition, a network controller may enable low-delay packet transmission by skipping an aggregating operation if needed after sorting the order of packets transmitted to the ports (meaning that packet transmission delay can be reduced by omitting the combining operation).

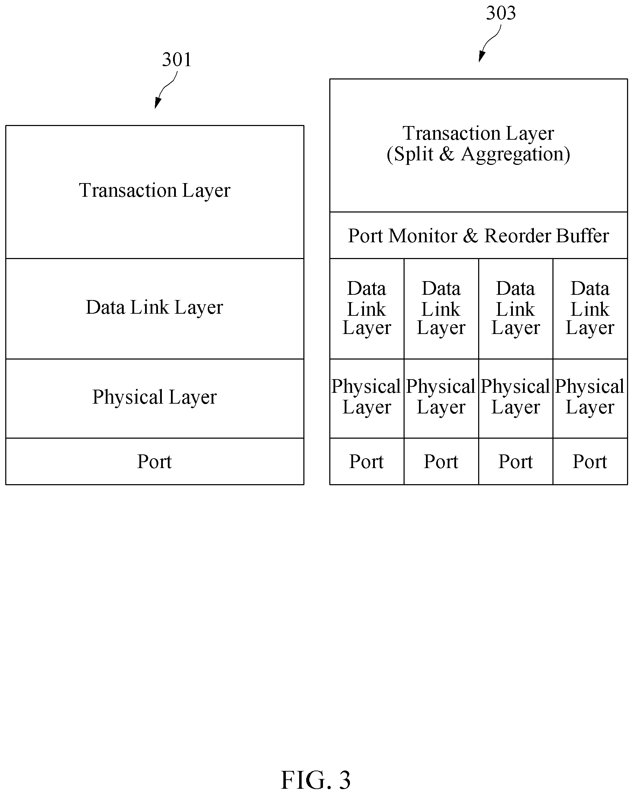

FIG. 3 illustrates an example of a port management structure of a network controller. Diagram 301 illustrates a protocol stack for a general PCIe controller and diagram 303 illustrates a protocol stack for a network controller according to an embodiment.

A physical layer of PCIe communication stack may perform conversion on serial signals and parallel signals and may manage interconnected links so that the interconnected links may together perform physically stable communication. A data link layer may perform management so that stable communication is possible through error detection and retransmission of the PCIe packet. A transaction layer may convert, into a PCIe packet, a signal/data transmitted from a device to a PCIe controller (i.e., packetize the signal/data).

As shown in the diagram 301, the general PCIe controller may manage one transmission layer (one data link layer, one physical layer, and one port layer), and the total data transmission speed may be limited by the version of the PCIe standard and the number of lanes. For example, the communication speed in PCIe 6.0 is 16-gigabyte (GB)/s per lane, which is 256 GB/s when all 16 lanes are used. In contrast, a high-bandwidth memory (HBM) inside the latest GPU, which is widely used as a PCIe device, is up to 819 GB/s, which may worsen the memory bandwidth imbalance between the relevant computing nodes.

In contrast, as shown in the diagram 303, the network controller according to an embodiment may increase the overall bandwidth through split transmission using multiple ports below the transaction layer in the protocol stack. The network controller may achieve high-bandwidth transmission efficiency by performing split transmission and restoration on packets by managing multiple data link layers (e.g., 4 data link layers) and multiple physical layers (e.g., 4 physical layers) respectively corresponding to the ports (e.g., 4 ports); the split transmission technique may be enabled by one transaction layer having a port monitor circuit and a reorder buffer that enable splitting and aggregating functionality.

FIG. 4A illustrates an example of a packet flow standard through PCIe layers, according to one or more embodiments. FIG. 4A shows a diagram 400 of a packet flow standard of a transaction layer 401, a data link layer 403, and a physical layer 405 of PCIe.

A packet transmitted from the transaction layer 401 may include, for example, a prefix 410, a header 420, data 430, and an ECRC.

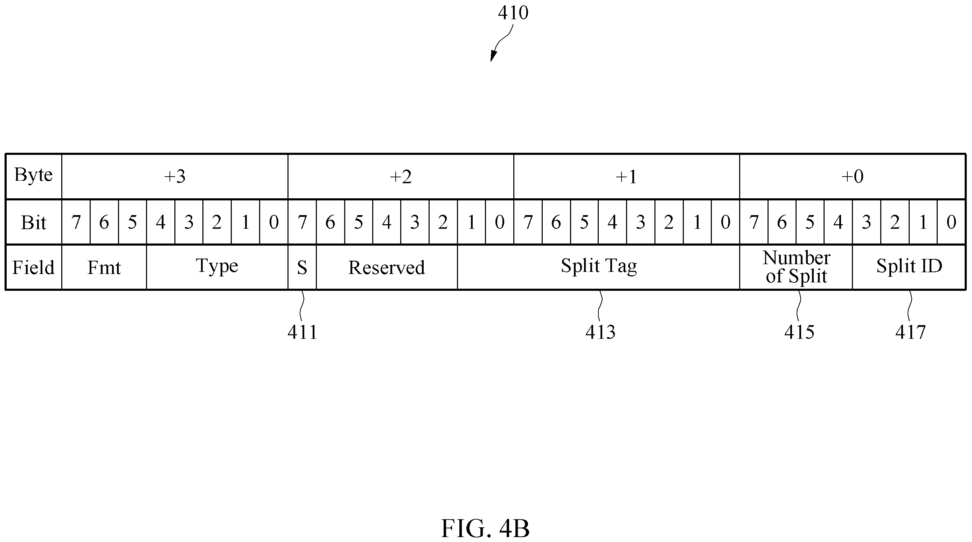

The prefix 410 is an optional field added before the header 420 of a PCIe packet and may be used to expand the properties or functions of the PCIe packet. The prefix 410 may have a size of 4 bytes. Information related to split packets may be transmitted using the prefix 410. A format of the prefix 410 is described with reference to FIG. 4B.

The header 420 may determine the format of a packet that transmits and receives data to and from a PCIe system. The header 420 may be added or removed to and from the packet for each of the transaction layer 401, the data link layer 403, and the physical layer 405 (the header 420 may be added at the transaction layer; the data link layer and the physical layer may just encapsulate and carry the entire TLP packet, including its header). The header 420 may include information such as the starting point and destination of the packet, instruction, data length, and/or error detection code.

The data 430 is data to be transmitted and may also be referred to as a payload.

The ECRC is the end of the transaction layer packet that transmits data in the PCIe system, that is, an optional field added after the data 430, and may correspond to the error detection code. The ECRC may be used to verify a processing result of a TLP. The ECRC may be generated from the transaction layer 401 of a transmitting device and may be inspected at the transaction layer 401 of a receiving device. The ECRC may include all fields that remain unchanged while the TLP is transmitted from the starting point to the destination. The ECRC may be used to ensure data integrity between the transmitting device and the receiving device.

A packet transmitted from the data link layer 403 (a data link packet) may further include a sequence number and a link CRC (LCRC).

The sequence number may be a field used to verify the order and integrity of a packet in the data link layer 403. The sequence number may include 12 bits and may be prepended to the packet. The sequence number may increase by 1 each time the transmitting device sends a packet, and the receiving device may detect an error or loss of the packet by comparing the sequence number of the received packet with the expected sequence number of the received packet.

The LCRC is an error detection code processed at the data link layer 403 and may detect and correct an error of the TLP in a link unit.

In addition, a packet transmitted from the physical layer 405 may further include framing(s). The framing(s) may correspond to a field used to represent the start and the end of the packet in the physical layer 405. The framing(s) may include signals such as a start of packet (STP), a start of data payload (SDP), an end of packet (END), and the like. The framing(s) may each be prepended to the header 420 (and the sequence number) and may be appended after the LCRC. The receiving device may recognize the boundary of the packet through the framing(s) and may inspect the validity of the packet.

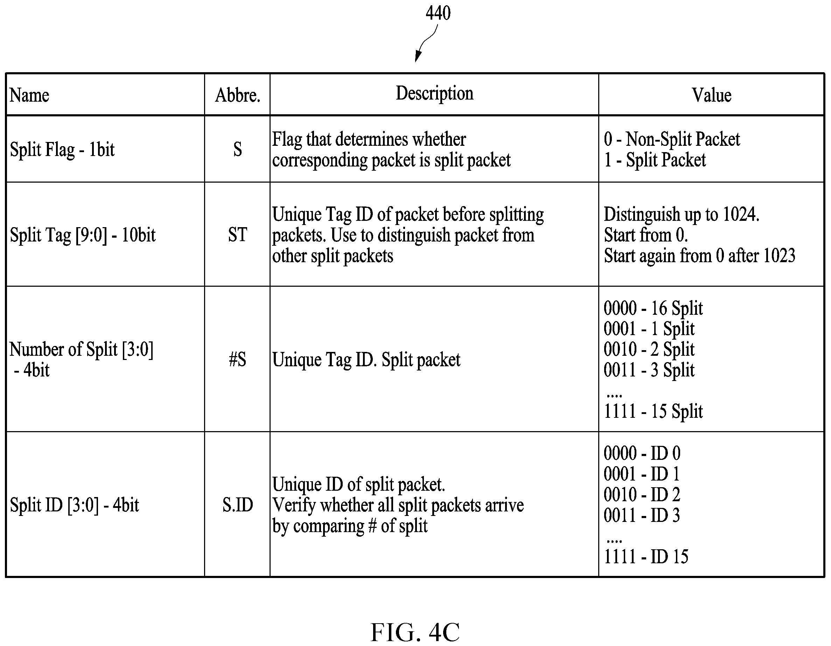

FIG. 4B illustrates an example format of a PCIe end-to-end prefix, and FIG. 4C illustrates an example format definition of a prefix for a network controller, according to one or more embodiments.

FIGS. 4B and 4C respectively show a format of a prefix 410 and a table 440 illustrating a format definition of a prefix.

The network controller may split and aggregate packets using a 4-byte end-to-end prefix defined by the PCIe standard.

In PCIe standards, Byte +3 (31:24 bit) may represent which vendor's format Byte +3 (31:24 bit) is, and Byte +0, +1, +2(23:0 bit) may be used to define a new field. The network controller may split and aggregate packets using 24 bits of Byte +0, +1, +2 (23:0 bit).

First, the value in a split flag S [bit 23] 411 may indicate whether a corresponding packet is a split packet.

A split tag ST [bit 17:8] 413 may represent unique tag ID information (e.g., an ID) of a corresponding packet before splitting. The split tag ST [bit 17:8] 413 may be used to distinguish split packets from each other.

The number of split #S [bit 7:4] 415 may represent the number of packets split by 4 bits. For example, '0001' may indicate that the number of split packets is 1. '0010' may indicate that the number of split packets is 2, and '1111' may indicate that the number of split packets is 15. '0000' may indicate that the number of split packets is 16.

A split ID S.ID [bit 3:0] 417 may correspond to unique ID information (e.g., an ID) of split packets. The split ID S.ID [bit 3:0] 417 may represent a maximum of 16 split IDs per the split tag ST [bit 17:8] 413. A receiving device may verify whether all split packets arrive by comparing the number of split #S [bit 7:4] 415 with the split ID S.ID [bit 3:0] 417.

FIG. 5 illustrates an example of a network controller including a function of splitting and aggregating packets. Referring to FIG. 5, a network controller 500 may include a split circuit 510, a port monitor circuit 520, a packet generator 530, an aggregation circuit 540, a reorder buffer 550, and ports 560 (e.g., 4 ports).

The network controller 500 may enable high-speed communication between PCIe devices using the ports 560.

The port monitor circuit 520 that receives a packet transmission request may determine, among the ports 560, the number of valid ports by collecting pieces of error information transmitted through data link layers and physical layers respectively corresponding to the ports 560 managed by one transaction layer and monitoring states of the respective ports 560.

The split circuit 510 may split one packet into split packets and transmit the split packets to the valid ports based on the ports being determined to be valid ports by the port monitor circuit 520. For example, when it is determined that all or only two of four ports are available, the split circuit 510 may, as the case may be, generate first split packets by splitting the one packet into four packets or two packets by the packet generator 530. Here, each of the first split packets generated by the packet generator 530 may be a packet that conforms to a PCIe standard ("first" is used to distinguish split packets of another packet, below. For example, when the size of one packet is 64 bytes, if split into two packets, the two packets into which it is split may each have a size of 32 bytes, and when a packet is split into four packets, the four split packets may each have a size of 16 bytes. When a packet is split by the split circuit 510, changing a header and prefix for each first split packet may be performed by the split circuit 510 or the packet generator 530.

The first split packets, which result from splitting a packet into four or two packets, generated by the packet generator 530 may be transmitted to other network controllers through four or two valid ports. The packet generator 530 may be included in the split circuit 510 or provided separately.

When second split packets (not necessarily related to the first split packets) are received from other network controllers through the ports 560, the reorder buffer 550 may sort the second split packets in order and may restore the second split packets according to prefix information of the second split packets. Here, when the second split packets need to be aggregated, the aggregation circuit 540 may restore the second split packets by aggregating the second split packets into one packet based on a register set value of the second split packets.

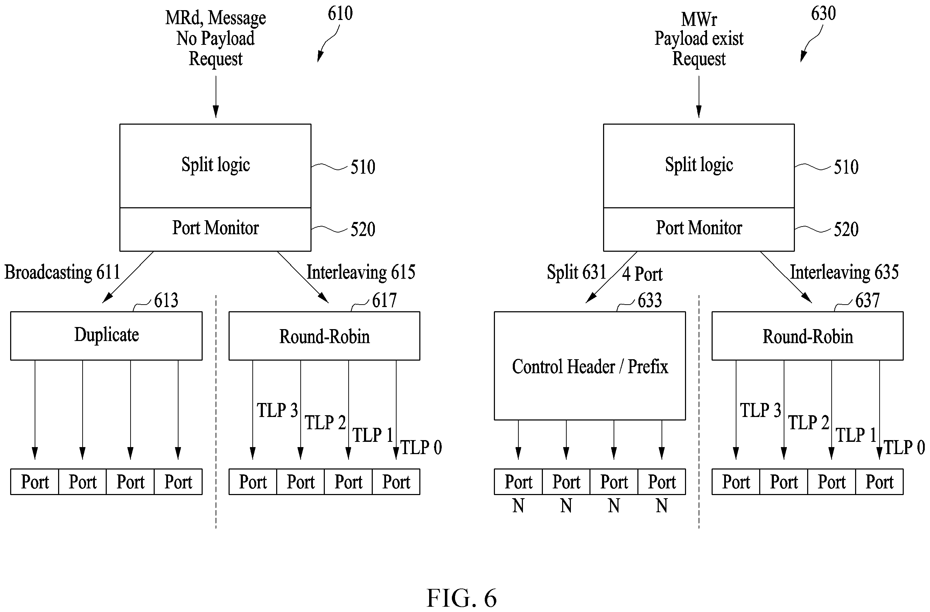

FIG. 6 illustrates an example of a packet split operation of a network controller, according to one or more embodiments. FIG. 6 shows diagrams 610 and 630 illustrating the network controller transmitting a packet in various ways according to the type of the packet being transmitted.

For example, when the packet is an MRd packet, message, or packet that does not include a payload, the network controller may duplicate 613 the packet to four valid ports by broadcasting 611 the packet to the four ports as shown in the diagram 610 (lower left). Otherwise, the network controller may transmit the packet to the four ports by interleaving 615 the packet in a round-robin manner 617. As with broadcast, the packet may be duplicated on each port, but interleaved instead of simul-cast.

When the packet is an MRd packet, there is only a header content indicating that information at an address will be read without a payload, so the Message does not include a payload as well. Accordingly, the network controller may process the packet like a packet that does not include a payload.

In the diagram 610, when packet Athat does not include a payload is received, the packet A may be output to the four ports through the split circuit 510 and the port monitor circuit 520. Here, when the network controller desires to increase the reliability of packet transmission according to a register set value of the packet A, the network controller may duplicate 613 the packet A to the four ports by broadcasting 611 the packet A to the four ports. Here, when the packet A is properly transmitted through one of the four ports, the transmission may be considered completed, so the reliability of transmission may increase (other duplicate packets may be ignored or retransmitted as needed).

Alternatively, when the network controller desires to increase the packet transmission speed according to the register set value of the packet A, the network controller may increase the transmission speed by alternately transmitting the packet A to the four ports by interleaving 615 the packet A in the round-robin manner 617. In addition, when the processing capacity of valid ports is greater than or equal to a set reference, the network controller may transmit the packet A to the valid ports by interleaving 615 the packet A in the round-robin manner 617.

Additionally, for example, when a packet is an MWr packet or a packet including a payload, the network controller may split 631 the packet A into four split packets a1, a2, a3, and a4, as shown in the diagram 630, may change a TLP including a header and prefix 633, and then may transmit the packet A through the four ports or may transmit the packet A to the four ports by interleaving 635 the packet A in a round-robin manner 637.

When a packet is split and transmitted, the network controller may split the packet A and transmit the packet A according to the packet size that a device on a receiving side may process. When the processing capacity of the valid ports is less than the set reference, the split circuit 510 may generate first split packets obtained by splitting the packet A into the number of valid ports and may change the header and prefix 633 for each of the first split packets. Here, in the process of splitting packets, a header is split from one header into multiple ports, so each split packet may be transmitted with a designated prefix attached.

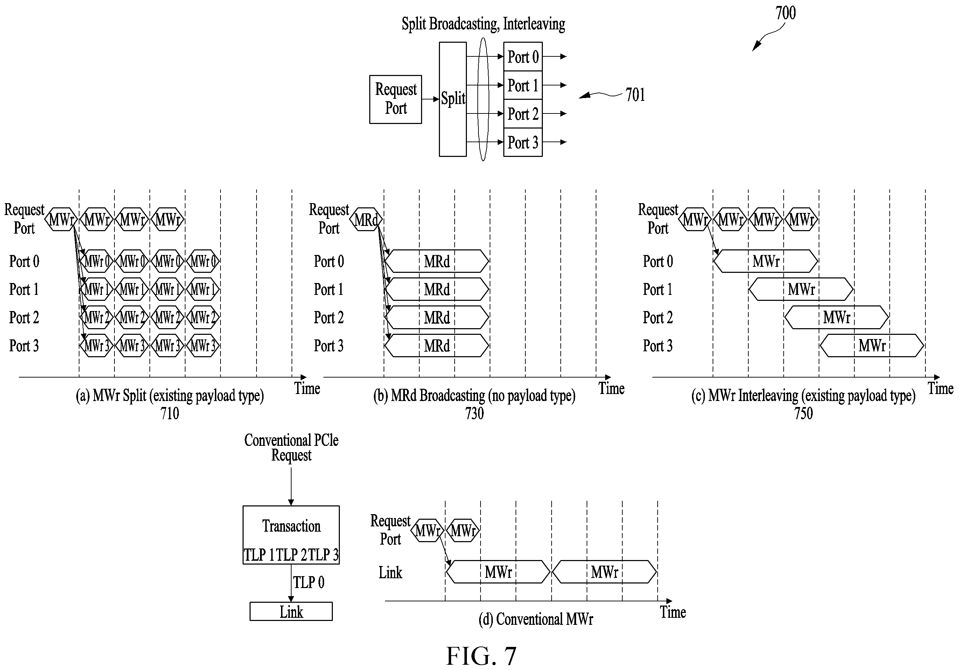

FIG. 7 illustrates an example method in which a network controller splits packets in various ways according to the type of TLP, according to one or more embodiments. FIG. 7 shows a diagram 700 of various methods in which the network controller transmits a packet according to the type of packet.

The network controller may define a split operation according to the presence or absence of a payload and may set a value of a register.

For example, as shown in a diagram 701, when a split circuit splits a packet and transmits the split packet and when the packet is an MWr packet, the network controller may split one packet of 64 bytes into four packets of 16 bytes and may transmit the four packets of 16 bytes to four ports one by one, as shown in a diagram 710.

Alternatively, when the packet is an MRd packet, the network controller may broadcast the MRd packet to the four ports, as shown in a diagram 730. Here, the MRd packet may be, for example, a non-split packet of 64 bytes.

When the packet is an MWr packet, and the processing capacity of valid ports is greater than or equal to a set reference, the network controller may transmit, for example, an MWr packet of 64 bytes by alternating the four ports in a round-robin manner, as shown in a diagram 750.

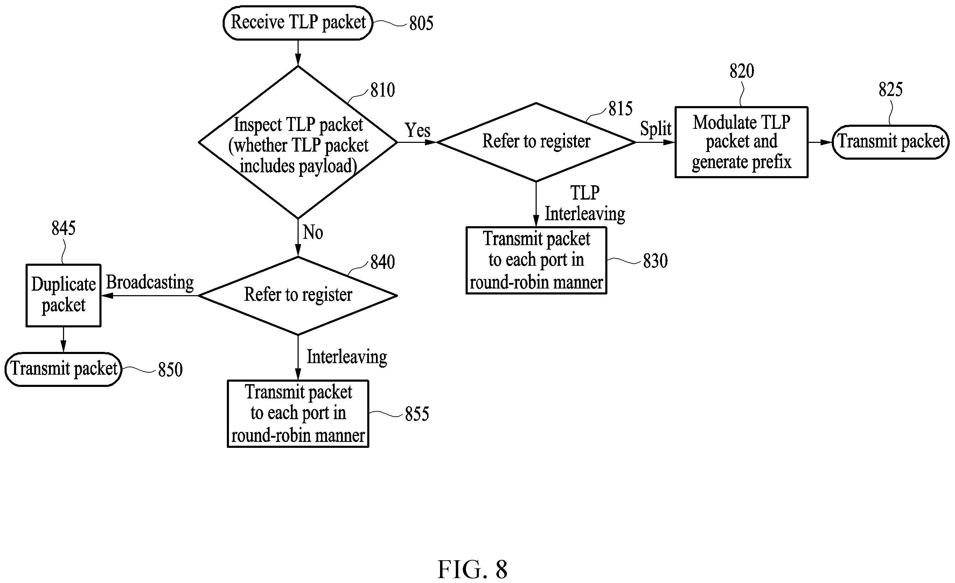

FIG. 8 illustrates an example method of a split circuit of a network controller, according to one or more embodiments.

In operation 805, the network controller may receive a TLP packet.

In operation 810, the network controller may inspect the TLP packet and may determine whether the TLP packet includes a payload.

In operation 815, the network controller may refer to a set value of a register of the TLP packet when operation 810 determines that the TLP packet includes a payload.

In operation 820, the network controller may modulate the TLP packet, may generate a prefix, and may then generate split packets when a set value of the register referred to in operation 815 represents packet splitting. In operation 825, the network controller may transmit the split packets generated in operation 820.

In operation 830, the network controller may transmit the split packets to each port in a round-robin manner when the set value of the register referred to in operation 815 represents packet interleaving.

In operation 840, the network controller may refer to the register of the TLP packet when it is determined that the TLP packet does not include the payload in operation 810.

In operation 845, the network controller may duplicate the split packets. In operation 850, the network controller may transmit the duplicated packets through ports when the set value of the register referred to in operation 840 represents packet broadcasting.

In operation 855, the network controller may transmit the split packets to each port in the round-robin manner when the set value of the register referred to in operation 840 represents packet interleaving.

FIG. 9 illustrates an example operation of a port monitor circuit, according to one or more embodiments. FIG. 9 shows a diagram 900 illustrating layers in which a port monitor circuit 910 operates, and a diagram 930 illustrating an embodiment including the port monitor circuit 910 for each port.

In the diagram 900, for example, when PCIe packets arrive at four physical layers 901 through four respective ports, the four physical layers 901 may inspect the PCIe packets and may transmit the PCIe packets to data link layers 903. The data link layers 903 may inspect for errors in the PCIe packets and may transmit a TLP to a transaction layer 905 when there is no corresponding error.

Here, the port monitor circuit 910 may determine which ports to use (which ports are valid) by collecting pieces of information received from low-level layers of each port such as LTSSM state information transmitted through the four physical layers 901 and an error message transmitted through other data link layers. The port monitor circuit 910 may determine through which port to transmit the TLP generated in the one transaction layer 905 according to the determination result, that is, the port monitor circuit 910 may determine a valid port and invalid port. Here, the four physical layers 901 may correspond to, for example, slots of four graphics cards.

As shown in the diagram 930, the port monitor circuit 910 may be positioned for monitoring each port.

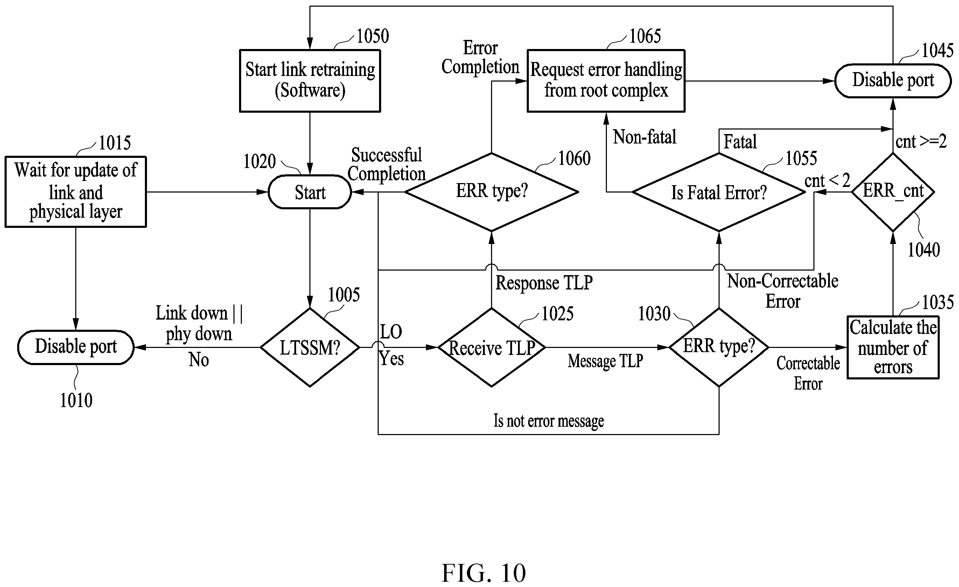

FIG. 10 illustrates an example of an operating method of a port monitor circuit. Referring to FIG. 10, the port monitor circuit may disable a port or may request error handling, through operations 1005 to 1065.

In operation 1005, the port monitor circuit may determine whether communication of a physical link is possible by inspecting an LTSSM of a corresponding physical layer.

In operation 1010, the port monitor circuit may disable a port connected to the physical link when it is determined that the communication of the physical link is impossible in operation 1005. In operation 1015, the port monitor circuit may wait for an update of a link and a physical layer. In operation 1020, the port monitor circuit may then perform the start process again when the link and the physical layer are updated.

In operation 1025, the port monitor circuit may receive a TLP when it is determined that the communication of the physical link is possible in operation 1005.

In operation 1025, the port monitor circuit may verify whether the TLP is a response TLP or message TLP.

In operation 1060, the port monitor circuit may determine the type of TLP (when the TLP has been determined to be a response TLP in operation 1025). In operation 1060, the port monitor circuit may determine whether the type of TLP is successful completion (SC) indicating that the transmission is normally processed, or whether another error is completed. In operation 1060, the port monitor circuit may verify 3 bits of a field in a completion state inside the response TLP and may thus determine whether the type of TLP is SC or in another state.

In operation 1065, the port monitor circuit may request error handling from a root complex. In operation 1045, the port monitor circuit may then disable a port if needed when 3 bits of the field in the completion state do not indicate SC in operation 1060. Here, the reason for disabling the port if needed may be that there is no problem with the link, such as an unsupported request, but exceptions such as a request for an unsupported feature may occur. In operation 1050, the port monitor circuit may (re)train the link of the disabled invalid port and may return to the start process in operation 1020.

In operation 1060, when the3 bits of the field in the completion state indicate SC, the port monitor circuit may perform the start process in operation 1020.

In operation 1030, the port monitor circuit may verify the type of error included in the message TLP when it has been determined in operation 1025 that the TLP is a message TLP.

In operation 1030, the port monitor circuit may determine the type of error message. In operation 1035, the port monitor circuit may count (calculate) the number of correctable errors. In operation 1040, the port monitor circuit may determine whether the counted number of correctable errors is greater than or equal to 2 (as an example) when the error message represents the correctable errors in operation 1030. In the PCIe standard, when correctable errors occur three or more times, the port monitor circuit may determine that the state of the link is unstable, may abort reception and transmission, and may retrain the link. Before hardware retrains the link, the port monitor circuit may enable stable communication by disabling ports in advance and retraining the link through software. In operation 1045, the port monitor circuit may disable an invalid port (among the ports) when it is determined that the counted number of correctable errors is greater than or equal to 2 in operation 1040. In operation 1050, after disabling the invalid port, the port monitor circuit may (re)train the link of the disabled invalid port and then may return to the start process again in operation 1020. Here, the (re)training of the link may be performed by software. When it is determined that the counted number of correctable errors is less than 2 in operation 1040, the port monitor circuit may return to the start process again in operation 1020.

In operation 1055, the port monitor circuit may determine whether a non-correctable error is a fatal error when operation 1030 determines that the error message is not a correctable error, that is, when the type of error message represents non-correctable errors.

When it is determined that the non-correctable errors are fatal errors in operation 1055, the port monitor circuit may disable the port in operation 1045, may (re)train the link of the disabled invalid port in operation 1050, and may return to the start process in operation 1020.

When it is determined that the non-correctable errors are not fatal errors in operation 1055, the port monitor circuit may allow the root complex to disable the port through operation 1045 if needed by the determination of the root complex in operation 1065.

The port monitor circuit may individually perform the monitoring process on each port described above with reference to FIG. 10.

FIG. 11 illustrates an example operation of a reorder buffer and an aggregation circuit of a network controller, according to one or more embodiments. FIG. 11 shows a diagram 1100 of the network controller restoring packets received through ports.

For example, a reorder buffer 550 of the network controller may sort the packets as received through four ports, and the sorting may be according to the split ID included in the prefix of each packet (the split packets may be stored in an order in the reorder buffer 550 that corresponds to their split IDs). Here, according to a register set value of each packet, the reorder buffer 550 may process (output) the sorted packets without any change or may process arrival packets by combining the packets into one packet by an aggregation circuit 540 and restoring the one packet to the original TLP.

For example, according to the register set value (e.g., a set value of an enabled register or disabled register) of each packet, when the packets represent split packets, the reorder buffer 550 may restore the split packets to one TLP by providing the sorted packets to the aggregation circuit 540. The aggregation circuit 540 may verify whether all split packets are received by the split ID included in the prefix of each packet. In this way, the network controller may solve a sorting problem of packets caused by a multi-path using the reorder buffer 550. In contrast, when the packets are not split packets, the reorder buffer 550 may output the sorted packets without any change.

More specifically, for example, the network controller on a receiving side may not guarantee the receival order of the split packets due to skew and/or other causes of a link. The reorder buffer 550 may sort the order of packets in the order transmitted by a transmitting side. Split tags included in the prefixes of the respective split packets may represent a value of split packets to be currently processed (e.g., identify the split packets as being common from a same packet identified by the split tag). The network controller may process the next split tag value (of another packet that was split) only when all packet values of the split ID having a current split tag value arrive. In other words, originally split packets may be reassembled in the order of the originally split packets. For example, when a packet is received having a split tag value greater than the currently being processed/accumulated is received, the network controller may store (for future reassembly) the packet having the split tag value greater than the split tag value in a memory. In contrast, when a packet having a split value less than the current being-processed split tag value is received, the reorder buffer 550 may determine that there is a system error and may request a reset.

For example, when packets having different split IDs by as many as recorded in the number of splits of the prefix of the packets arrive, the network controller may process a packet having the next split tag value. Here, when the order of the split IDs increases sequentially from 0, the network controller may determine that the order is guaranteed and may transmit the packets without an aggregation procedure. The description provided above is only one of implementation methods of the reorder buffer 550, and the implementation method of the reorder buffer 550 may be implemented differently to reduce static random-access memory (SRAM) usage.

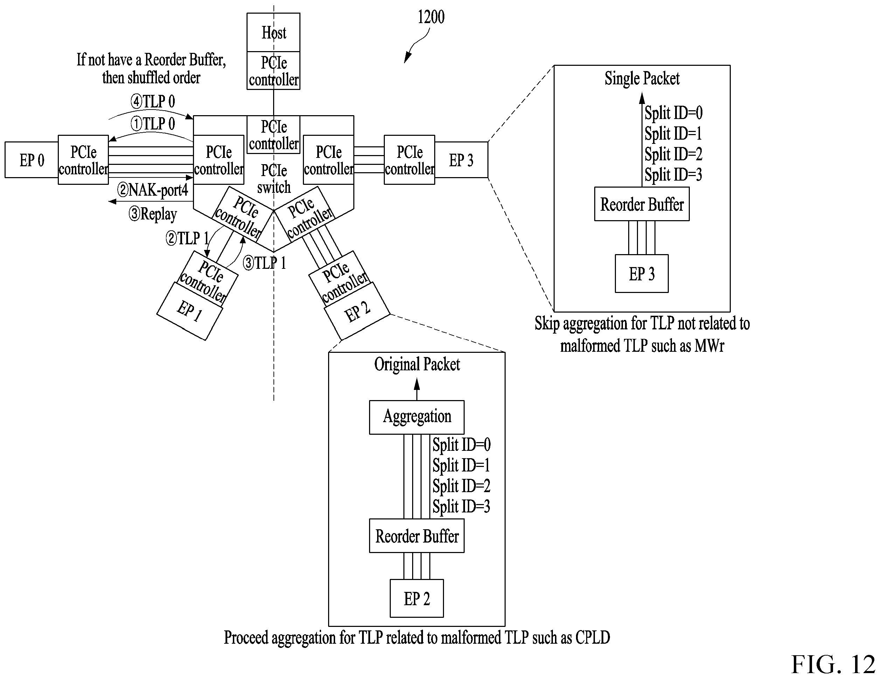

FIG. 12 illustrates an example method in which a network controller aggregates and reorders packets, according to one or more embodiments. Diagram 1200 illustrates a situation in which the order of packets is shuffled when the network controller (e.g., a PCIe controller) is combined with a host, a PCIe switch, and a plurality of EPs.

The PCIe switch may transmit a request packet received from the host to EP 0 and EP 1 in order.

Here, a request is transmitted to the EP 0 first, but due to a negative acknowledgment (NAK)-port 4 signal transmitted from the network controller of the EP 0, a retry may be performed from the PCIe switch to the network controller of the EP 0.

In this case, the PCIe switch may transmit the request to the EP 0 first but a response from the EP 1 may be received first, and here, the order of packets may be shuffled. When the network controller of the PCIe switch does not include a reorder buffer, due to a port error, such as NAK, the order of TLP 0 may be shuffled with the order of packets transmitted by other EPs.

Here, when both the reorder buffer and an aggregation circuit exist in EP 2, the EP 2 may sort the TLP 0, which is a packet transmitted from the EP 0, and TLP 1, which is a packet transmitted from the EP 1, according to the transmission order. The EP 2 may aggregate packets, for example, when the packets are TLPs related to a malformed TLP such as a complex programmable logic device (CPLD). As described above, the EP 2 may perform order sorting and packet restoration on packets in which the order is shuffled.

Alternatively, when only the reorder buffer exists and the aggregation circuit does not exist in EP 3, the EP 3 may perform order sorting on packets and may skip the aggregation of the packets. The network controller of the EP 3, for example, may skip the aggregation of the packets when transmitted packets are unrelated to a malformed TLP such as an MWr.

As described above, the network controllers may transmit packets by aggregating and restoring the packets according to whether the type of packets requires aggregation or may transmit sorted packets by skipping the aggregation of the packets.

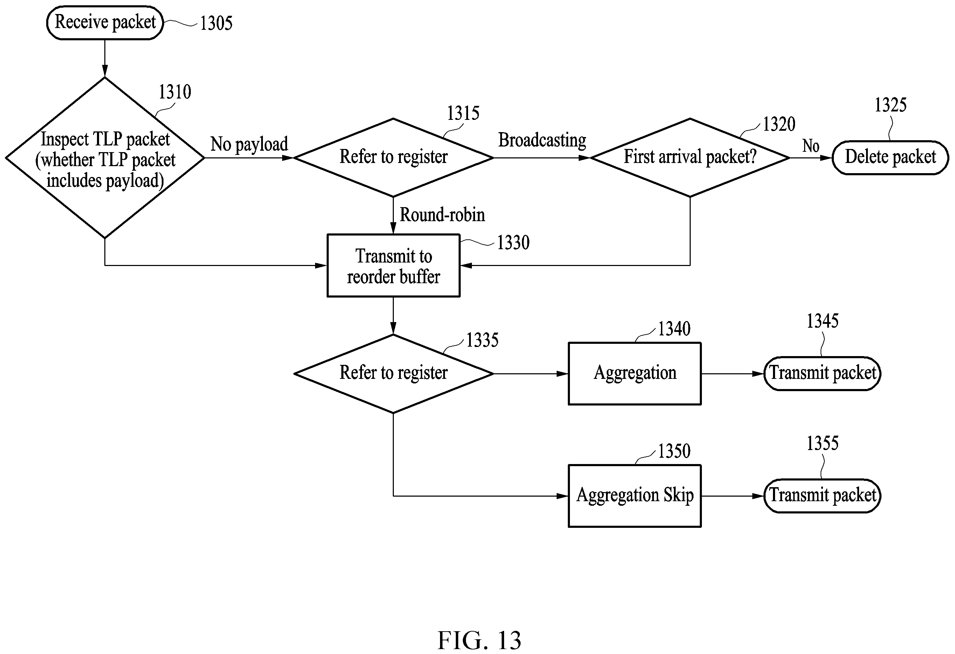

FIG. 13 illustrates an example of an operation of an aggregation circuit of a network controller. Referring to FIG. 13, the network controller may transmit packets through operations 1305 to 1355.

In operation 1305, the network controller may receive packets. Here, the packets may be, for example, TLP packets.

In operation 1310, the network controller may inspect the TLP packets received from operation 1305 and may determine whether the TLP packets include a payload.

In operation 1315, the network controller may refer to a register (e.g., a register set value) of the TLP packets when it is determined that the TLP packets do not include the payload in operation 1310.

In operation 1320, the network controller may determine whether the packets are first arrival packets when the register set value of the TLP packets referred to in operation 1315 corresponds to broadcasting. In operation 1325, the network controller may delete the packets when the packets are not the first arrival packets in operation 1320.

In operation 1330, the network controller may transmit the first arrival packets to a reorder buffer when the packets are the first arrival packets in operation 1320.

The network controller may transmit the packets received from operation 1330 to the reorder buffer when the register set value of the TLP packets referred to in operation 1315 corresponds to interleaving in a round-robin manner.

The network controller may transmit the packets received from operation 1330 to the reorder buffer when it is determined that the TLP packets include the payload in operation 1310.

In operation 1335, the network controller may refer to the register (e.g., the register set value) of the packets.

In operation 1340, the network controller may aggregate the received packets and then may restore the received packets to one packet. In operation 1345, the network controller may transmit the received packets when the register set value corresponds to, for example, aggregating in operation 1335.

In operation 1350, the network controller may skip aggregation of the received packets. In operation 1355, the network controller may transmit the received packets when the register set value does not correspond to, for example, aggregating.

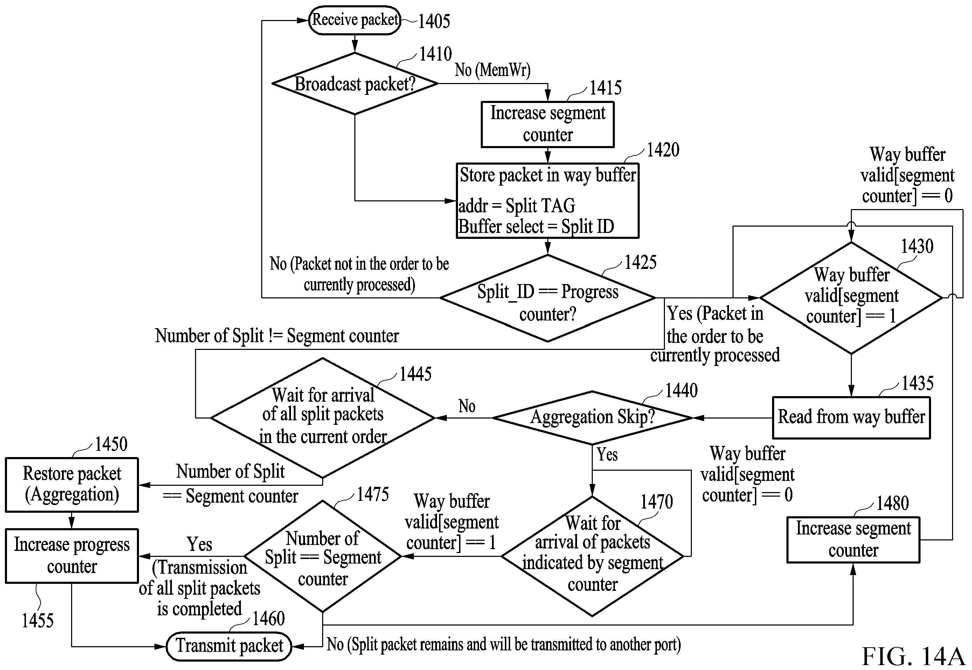

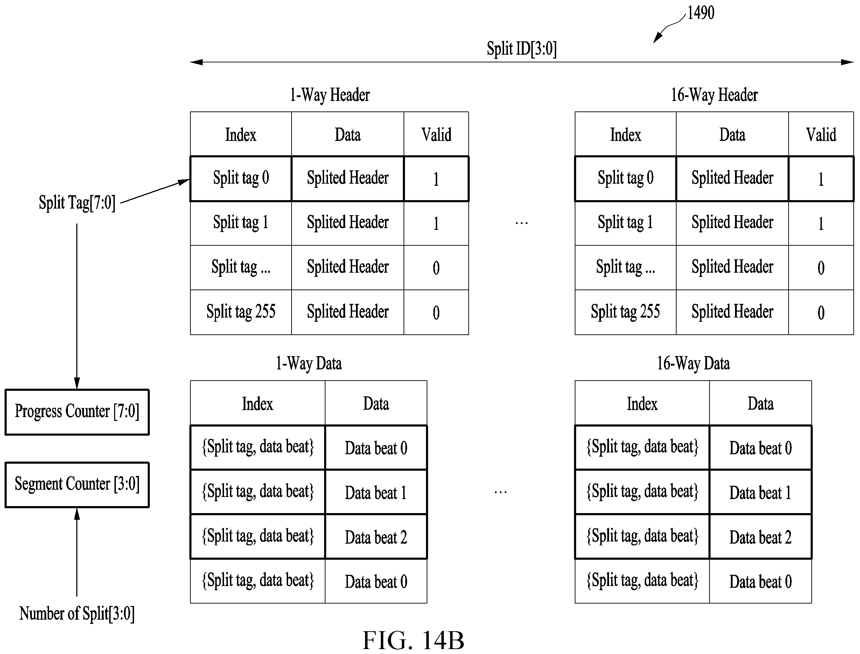

FIG. 14A illustrates an example of an operating method of a reorder buffer of a network controller, and FIG. 14B illustrates an example of an operation process of the reorder buffer of the network controller.

Referring to FIGS. 14A and 14B, the network controller may transmit packets through operations 1405 to 1445.

In operation 1405, the network controller may receive packets.

In operation 1410, the network controller may determine whether a progress counter indicating a split tag value to be currently processed matches the number of split tags.

In operation 1415, the network controller may increase a segment counter that counts the number of packets arriving at the current progress counter. In operation 1420, the network controller may then store the packets in a way buffer when it is determined that the progress counter matches the number of split tags in operation 1410.

Alternately, the network controller may store the packets in the way buffer in operation 1420 when it is determined that the progress counter does not match the number of split tags in operation 1410. Here, the network controller may set an address to the split tag value, and buffer selection may be performed by a split ID.

A method in which the network controller stores the packets in the way buffer in operation 1420 may refer to a diagram 1490 shown in FIG. 14B. In the diagram 1490, the index may represent an address of a memory, and valid may represent information on whether a value is read from the memory or the value is written in the memory. For example, in the case in which valid is 1 (e.g., valid = 1), this may indicate that a value is written in the memory, and in the case in which valid is 0 (e.g., valid = 0), this may indicate that a value is read from the memory. When packets are transmitted, a network controller on a transmitting side may label the order of the packets and may transmit the packets, so when the received packets are stored in the memory, a network controller on a receiving side may store (write) the received packets in the memory according to the order of index and may keep the sorting order of the received packets by reading the received packets from index 0 when reading the received packets from the memory. Here, the network controller may allocate the way buffer by as much as the packets are split. The buffer may be a typical dual port memory. Here, the 'way' may correspond to the maximum number of splits supported by a device and must be written in a register. The device may generate the dual port memory proportional to the number of packets the device may split. For example, in the case of a device that may split a packet into 16 packets, 16 identical dual port memories must be generated, and here, each of the generated 16 dual port memories may be referred to as a way. The way buffer may refer to a buffer having the split dual port memories as described above.

In operation 1425, the network controller may determine whether split IDs of all way buffers match a progress counter value. When the split IDs of all way buffers do not match the progress counter value (e.g., 'No') in operation 1420, the network controller may determine that the packets are not packets in the order to be currently processed and may receive new packets from operation 1405.

In operation 1430, the network controller may determine that the packets are packets in the order to be currently processed and may determine whether a valid value of the way buffers is '1' when the split IDs of all way buffers match the progress counter value (e.g., 'Yes') in operation 1425. The network controller may wait until the valid value of the way buffers becomes '1' when the valid value of the wafer buffers is '0' in operation 1430.

In operation 1435, the network controller may read data (e.g., a register set value of the packets) stored in the way buffer when the valid value of the way buffers is '1' in operation 1430.

In operation 1440, the network controller may determine whether to skip aggregation by referring to the register set value of the packets.

In operation 1470, the network controller may wait for the arrival of the packets indicated by the segment counter when the register set value of the packets is set to be disabled for aggregation, and the aggregation is skipped (e.g., 'Yes') in operation 1440. When the aggregation is skipped, the network controller may transmit the packets whenever packets corresponding to the progress counter arrive using the segment counter. For example, when a packet corresponding to 'split ID = 0' is split into packets and the packets sequentially enters ports 0, 1, 2, and 3, the progress counter may be '0,' and the segment counter may be '0.' In this case, the network controller may verify whether the packets arrive at way buffer 0 (port 0). When the packets arrive at the way buffer 0 (the port 0), the network controller may transmit the packet and may increase the segment counter by '1.' When the segment counter is '1', the network controller may verify whether the packets arrive at way buffer 1. When the packets arrive at the way buffer 1, the network controller may transmit the packets and may increase the segment counter by '1.' Here, when the segment counter increases by the number of split values defined in a prefix, the network controller may initialize the segment counter to '0' and then may increase the progress counter by '1.'

In operation 1470, the network controller may continuously wait for the arrival of the packets when a value (the segment counter) of the way buffer is '0.' In operation 1475, the network controller may determine whether the number of splits matches the number of segment counters when the packets indicated by the segment counter arrive, and the value (the segment counter) of the way buffer becomes '1' in operation 1470.

In operation 1455, the network controller may increase the progress counter. In operation 1460, the network controller may transmit the packets by determining that transmission of all split packets is completed when the number of splits matches the number of segment counters in operation 1475.

When there are non-transmitted split packets among the split packets, and the network controller is planning to transmit the non-transmitted split packets to other ports, the network controller may increase the segment counter in operation 1480 and may perform operation 1430 when the number of splits does not match the number of segment counters in operation 1475.

In operation 1445, the network controller may wait for the arrival of all split packets in the current order when the register set value of the packets is set to be enabled for the aggregation, and the aggregation is not skipped (e.g., 'No') in operation 1440. The network controller may wait until the valid value of all way buffers indicated by all split tag IDs becomes '1.' For example, one packet may be split into four split packets, a value of 'split tag ID = 0' may arrive at the ports 0, 1, and 2, resulting in the valid value becoming '1', but a split packet with 'split tag ID = 1' may arrive first at the port 3. In this case, the network controller may store the split packets that arrive first at 3-way buffer[1] and may wait until a split packet (split ID = 0) corresponding to 3-way buffer[0] arrives.

When all split packets do not arrive in operation 1445, that is, when the number of split packets does not match the number of segment counters, the network controller may perform operation 1430. In operation 1450, the network controller may restore the packets when all split packets arrive in operation 1445, that is, when the number of split packets matches the number of segment counters. In operation 1455, the network controller may increase the progress counter after the network controller restores the packets and may transmit the packets in operation 1460.

The network controller may change a header and/or data of the split packets and may generate TLP packets of which each TLP packet is valid, so there is no problem of which of the split packets is transmitted first. For example, when packets before segmentation are a 64-byte write request, the split packets may be Address 0x0, Length = 16. In the case in which 64-byte write request packets are split, one packet may be changed to four split packets (Address 0x0 length 4, Address 0x4 length 4, Address 0x8 length 4, and Address 0xC length 4).

For example, in the case of an MRd packet that performs broadcasting, when there is a packet arriving at one of the four ports, the network controller may immediately increase the progress counter and may ignore the remaining packets.

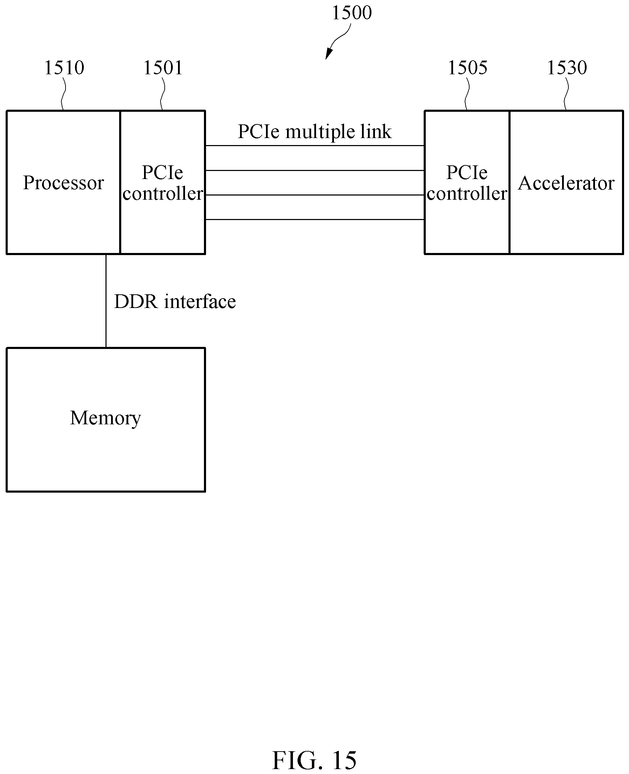

FIG. 15 illustrates an example of a case in which a network controller is used in a plurality of devices. FIG. 15 shows a diagram 1500 illustrating a case in which the network controller is used in combination with the plurality of devices.

The network controller may perform data communication through a plurality of ports, unlike a PCIe controller, which manages one link. Here, the split function of splitting packets and/or aggregation function of restoring the packets may be performed by a processor 1510 and an accelerator 1530 in addition to network controllers 1501 and 1505. The packets may be split and transmitted through each link, and communication speed, which is limited to a physical layer, may increase by a value obtained by multiplying PCIe transmission speed by the number of links. In addition, the network controllers 1501 and 1505 may split packets and transmit the packets through a monitoring function without using an unusable link.

When the network controllers 1501 and 1505 are used together with a PCIe switch (not shown), the split function of splitting the packets and/or aggregation function of restoring the packets may be performed by the PCIe switch in addition to the processor 1510 and the accelerator 1530. When the packets are split by the processor 1510 and the accelerator 1530, the PCIe switch may determine whether the splitting of the packets occurs, and when the packets are split, the network controllers 1501 and 1505 may transmit the packets without performing the split and/or aggregation function.

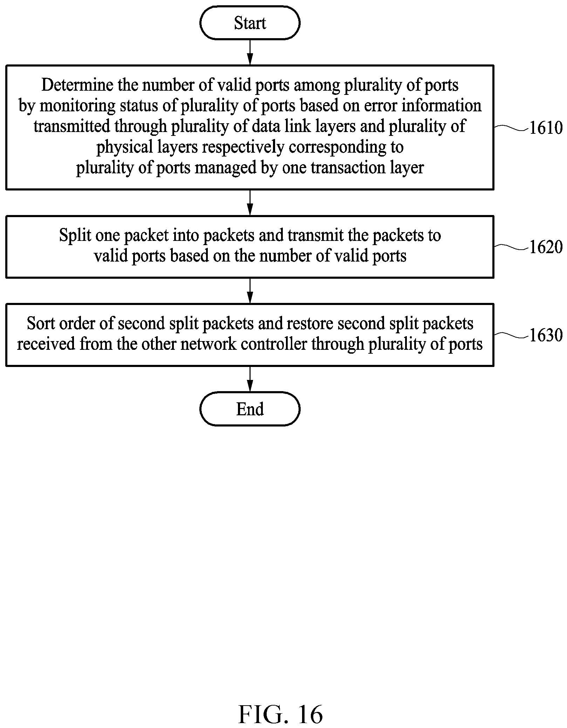

FIG. 16 illustrates an example of an operating method of a network controller. Referring to FIG. 16, the network controller may restore split packets through operations 1610 to 1630.

In operation 1610, the network controller may determine the number of valid ports among a plurality of ports by monitoring a state of the plurality of ports based on error information transmitted through a plurality of data link layers and a plurality of physical layers respectively corresponding to the plurality of ports managed by one transaction layer.

In operation 1620, the network controller may split one packet into packets and transmit the packets to the valid ports based on the number of valid ports.

In operation 1630, the network controller may sort the order of second split packets and may restore the second split packets received from the other network controller through the plurality of ports.

The examples described herein may be implemented using a hardware component, a software component, and/or a combination thereof. A processing device may be implemented using one or more general-purpose or special-purpose computers, such as, for example, a processor, a controller, an arithmetic logic unit (ALU), a digital signal processor (DSP), a microcomputer, a field programmable gate array (FPGA), a programmable logic unit (PLU), a microprocessor or any other device capable of responding to and executing instructions in a defined manner. The processing device may run an operating system (OS) and one or more software applications that run on the OS. The processing device also may access, store, manipulate, process, and generate data in response to execution of the software. For purpose of simplicity, the description of a processing device is used as singular; however, one skilled in the art will appreciate that a processing device may include multiple processing elements and/or multiple types of processing elements. For example, the processing device may include a plurality of processors, or a single processor and a single controller. In addition, different processing configurations are possible, such as parallel processors.

The software may include a computer program, a piece of code, an instruction, or some combination thereof, to independently or uniformly instruct or configure the processing device to operate as desired. Software and data may be embodied permanently or temporarily in any type of machine, component, physical or virtual equipment, or computer storage medium or device capable of providing instructions or data to or being interpreted by the processing device. The software also may be distributed over network-coupled computer systems so that the software is stored and executed in a distributed fashion. The software and data may be stored by one or more non-transitory computer-readable recording mediums.

The methods according to the above-described examples may be recorded in non-transitory computer-readable media including program instructions to implement various operations of the above-described examples. The media may also include, alone or in combination with the program instructions, data files, data structures, and the like. The program instructions recorded on the media may be those specially designed and constructed for the purposes of examples, or they may be of the kind well-known and available to those having skill in the computer software arts. Examples of non-transitory computer-readable media include magnetic media such as hard disks, floppy disks, and magnetic tape; optical media such as CD-ROM discs and/or DVDs; magneto-optical media such as optical discs; and hardware devices that are specially configured to store and perform program instructions, such as read-only memory (ROM), random access memory (RAM), flash memory, and the like. Examples of program instructions include both machine code, such as produced by a compiler, and files containing higher-level code that may be executed by the computer using an interpreter.

The above-described hardware devices may be configured to act as one or more software modules in order to perform the operations of the above-described examples, or vice versa.

As described above, although the examples have been described with reference to the limited drawings, a person skilled in the art may apply various technical modifications and variations based thereon. For example, suitable results may be achieved if the described techniques are performed in a different order and/or if components in a described system, architecture, device, or circuit are combined in a different manner and/or replaced or supplemented by other components or their equivalents.

Accordingly, other implementations are within the scope of the following claims.

The computing apparatuses, the vehicles, the electronic devices, the processors, the memories, the image sensors, the vehicle/operation function hardware, the ADAS/AD systems, the displays, the information output system and hardware, the storage devices, and other apparatuses, devices, units, modules, and components described herein with respect to FIGS. 1-11 are implemented by or representative of hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-11 that perform the operations described in this application are performed by computing hardware, for example, by one or more processors or computers, implemented as described above implementing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media. Examples of a non-transitory computer-readable storage medium include read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, in addition to the above disclosure, the invention is defined by the enclosed claims.

## Claims

1. A network controller comprising:
based on error information transmitted through a plurality of data link layers and a plurality of physical layers respectively corresponding to a plurality of ports managed by one transaction layer, a port monitor circuit configured to determine a number of valid ports available among the plurality of ports by monitoring a status of the plurality of ports;
a split circuit configured to split and transmit one packet to the valid ports based on the number of valid ports; and
a reorder buffer configured to sort an order of second split packets received from another network controller through the plurality of ports and configured to restore the second split packets.

2. The network controller of claim 1, wherein the error information comprises at least one of:
a link training and status state machine, LTSSM, indicating a status of a link for each of the plurality of physical layers;
an error message generated by an error of the one packet in the plurality of data link layers; or
transaction layer packet, TLP, information transmitted through the one transaction layer.

3. The network controller of claim 2, wherein the port monitor circuit is configured to determine, by the LTSSM, whether communication of a physical layer corresponding to each of the plurality of ports is possible and configured to disable an invalid port unusable among the plurality of ports based on a type of the error message transmitted through a port capable of performing communication through the physical layer.

4. The network controller of claim 3, wherein the port monitor circuit is configured to disable the invalid port and then configured to train a link of the disabled invalid port, or
wherein, in response to the type of the error message indicating correctable errors, the port monitor circuit is configured to count a number of the correctable errors and configured to disable the invalid port among the plurality of ports based on the number of the correctable errors, or
wherein, in response to the type of the error message indicating non-correctable errors, the port monitor circuit is configured to disable the invalid port or configured to request error handling from a root complex according to whether the non-correctable errors are fatal errors.

5. The network controller of one of claims 1 to 4, wherein the split circuit is configured to split the one packet for the valid ports into packets based on at least one of whether the one packet comprises a payload or a register set value of the one packet.

6. The network controller of claim 5, wherein the split circuit is configured to broadcast the one packet to the valid ports or configured to transmit the one packet to the valid ports by interleaving the one packet in a round-robin manner according to the register set value of the one packet in response to the one packet not comprising the payload.

7. The network controller of claim 6, wherein the split circuit is configured to broadcast the one packet to the valid ports in response to the register set value of the one packet indicating memory read, MRd, or a message.

8. The network controller of claim 5, wherein the split circuit is configured to transmit the one packet to the valid ports by splitting the one packet into packets or configured to transmit the one packet to the valid ports by interleaving the one packet in a round-robin manner based on at least one of a processing capacity of the valid ports or the register set value of the one packet in response to the one packet comprising the payload.

9. The network controller of claim 7, wherein the split circuit is configured to generate first split packets obtained by splitting the one packet by the number of the valid ports and configured to change a header and a prefix for each of the first split packets in response to a processing capacity of the valid ports being less than a set reference, and
wherein the each of the first split packets is a packet that satisfies a peripheral component interconnect express, PCIe, standard.

10. The network controller of claim 7, wherein the split circuit is configured to transmit the one packet to the valid ports by interleaving the one packet in the round-robin manner in response to the register set value of the one packet indicating memory write, MWr, or a processing capacity of the valid ports being greater than or equal to a set reference.

11. The network controller of one of claims 1 to 10, wherein the reorder buffer is configured to sort the order of the second split packets using a prefix of the second split packets.

12. The network controller of one of claims 1 to 11, wherein the reorder buffer is configured to increase a first counter value as the second split packets are received from the other network controller and configured to allocate the received second split packets to a way buffer according to whether the increased first counter value matches a tag value of split packets to be currently processed, and
wherein the reorder buffer is configured to restore the second split packets to the one packet by increasing and sorting a second counter value corresponding to a number of packets that arrive at a first counter in response to the increased first counter value not matching the tag value of the split packets to be currently processed.

13. The network controller of one of claims 1 to 12, further comprising:
an aggregation circuit configured to restore the second split packets to the one packet by aggregating the second split packets based on a register set value of the second split packets.

14. The network controller of claim 13, wherein the aggregation circuit is configured to aggregate headers of the second split packets into one header and configured to aggregate payloads of the second split packets into one payload, or
wherein the aggregation circuit is configured to transmit the second split packets to the reorder buffer based on whether the second split packets comprise a payload; and determine whether to aggregate the second split packets based on the register set value of the second split packets.

15. An operating method of a network controller, the operating method comprising:
based on error information transmitted through a plurality of data link layers and a plurality of physical layers respectively corresponding to a plurality of ports managed by one transaction layer, determining a number of valid ports among the plurality of ports by monitoring a status of the plurality of ports;
splitting and transmitting one packet to the valid ports based on the number of the valid ports; and
sorting an order of second split packets received from another network controller through the plurality of ports and restoring the second split packets.
